# EUROPÄISCHE PATENTSCHRIFT

(11) **EP 1 268 112 B1**
(45) Veröffentlichungstag und Bekanntmachung des Hinweises auf die Patenterteilung: **18.08.2004**
(21) Anmeldenummer: 01927590.8
(22) Anmeldetag: 23.03.2001
(51) Int. Cl.: B23K 9/20

(54) **BOLZENAUSLASSEINRICHTUNG**
STUD DISCHARGE DEVICE
DISPOSITIF POUR DECHARGER DES GOUJONS

(30) Priorität: 29.03.2000 DE 10015494
(43) Veröffentlichungstag der Anmeldung: 02.01.2003
(73) Patentinhaber: Nelson Bolzenschweiss-Technik GmbH & Co. KG, 58285 Gevelsberg (DE)
(72) Erfinder: BUDDE, Karl-Friedrich, 58285 Gevelsberg (DE)
(74) Vertreter: Eder, Christian, Dipl.-Ing.
(86) Internationale Anmeldenummer: PCT/DE2001/001137
(87) Internationale Veröffentlichungsnummer: WO 2001/072461

(56) Entgegenhaltungen:
- DE-A- 1 952 467
- DE-U- 8 607 260
- US-A- 3 792 223

## Beschreibung

Die Erfindung bezieht sich auf eine Bolzenauslasseinrichtung zur Zuführung von hintereinander angeordneten Bolzen oder Stiften mittels Blasluft durch einen Kanal zu einem Bolzenschweißgerät, wobei die Bolzenauslasseinrichtung ein Lagerelement mit einer zum Kanal koaxialen Montageausnehmung zur Aufnahme einer Abführbuchse oder eines Zuführschlauchs aufweist. Mit Zuführschlauch ist hierbei der Förderschlauch für Bolzen zwischen der Bolzenauslassvorrichtung und dem Schweißwerkzeug definiert.

Als allgemein bekannter Stand der Technik sind bereits derartige Bolzenauslasseinrichtungen bekannt (EP 0 406 645 B1). Diese können beispielsweise mit Sortiereinrichtungen versehen sein, welche jedoch zumeist so gestaltet sind, dass eine Gefährdung des Bedienpersonals vorliegt; sie sind außerdem nicht CE-konform.

Bei einer Zuführeinheit der eingangs genannten Art liegt beispielsweise immer dann eine Gefahrensituation vor, wenn ein Zuführschlauch oder eine Abführbuchse aus einer Montagebohrung der Bolzenauslasseinrichtung entfernt und anschließend ein Bolzenfördervorgang absichtlich oder unabsichtlich ausgelöst wird. Der auf direktem Wege herausfliegende Schweißbolzen kann durch seine hohe kinetische Energie zu erheblichen körperlichen Schäden, vorrangig Augenverletzungen, führen.

Weiterhin ist eine Vorrichtung zum Zuführen von zu verarbeitenden Kleinteilen zu einem Verarbeitungsgerät, insbesondere Bolzenzuführvorrichtung für ein Bolzenschweißgerät bekannt (DE 195 32 937 Cl). Hier findet eine Messvorrichtung zur Überwachung des ordnungsgemäßen Zustandes und/oder der korrekten Verbindung eines Verbindungselements mit einer Zuführeinheit und/oder einer Bolzenzuführvorrichtung für das Bolzenschweißgerät Anwendung. Bei dieser bekannten Konstruktion wird bereits die Aufgabe gelöst, eine Gefährdung von Bedienungspersonen auch dann auszuschließen, wenn der Schlauch bzw. das Verbindungselement beschädigt oder vollkommen zerstört ist. Hier werden elektrische bzw. elektronische Mittel eingesetzt, um die vorgenannte Funktionssicherheit zu erfüllen.

Der vorliegenden Erfindung liegt entsprechend die Aufgabe zugrunde, eine einfach gestaltete, pneumatisch wirkende Konstruktion zu schaffen, welche die vorgenannte Gefahrenquelle effektiv ausschließt.

Diese Aufgabe wird erfindungsgemäß dadurch gelöst, dass einer mit dem Kanal verbundenen Luftzuführleitung mindestens ein zu der Montageausnehmung führender, durch die Abführbuchse oder durch den Zuführschlauch endseitig verschließbarer Nebenkanal zugeordnet ist. Durch die Schaffung dieses Nebenkanals ergibt sich der Vorteil, dass bei offener Montageausnehmung die kinetische Energie der Blasluft nicht mehr auf einen im Kanal vorliegenden Schweißbolzen einwirkt, so dass dieser nicht aus diesem Kanal herausschießen kann, wodurch die vorgenannte Gefahrenquelle beseitigt ist.

In vorteilhafter Weiterbildung kann der Nebenkanal einen größeren Durchmesser als die Luftzuführleitung aufweisen. Erfindungsgemäß besteht darüber hinaus die Möglichkeit, dass die Luftzuführleitung und/oder der Nebenkanal von einem Hauptkanal abzweigen. Hierbei kann im Lagerelement die Länge des Nebenkanals entweder größer oder kleiner als die der Luftzuführleitung sein.

Zusätzlich besteht die Möglichkeit, noch eine mechanische Ausblassperre in der Weise zuzufügen, dass endseitig des Kanals ein mechanisches Sperrelement angeordnet ist, welches in Sperrstellung in die Montageausnehmung ragt und in Offenstellung den Kanal freigibt. Das Sperrelement kann hierbei durch Aufnehmen bzw. Entfernen der Abführbuchse oder des Zuführschlauchs in die bzw. aus der Montageausnehmung aus der Offenstellung in die Sperrstellung und umgekehrt überführbar sein.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine schematische Vorderansicht eines Teils der Bolzenauslasseinrichtung, teils gebrochen;
- Fig. 2: einen Schnitt gemäß der Linie II-II in Fig. 1 vor dem Einsetzen einer Abführbuchse;
- Fig. 3: einen Schnitt analog Fig. 2 gemäß einer anderen Ausführungsform der Erfindung;
- Fig. 4: eine weitere Ausführungsmöglichkeit der Erfindung analog den vorgenannten Schnitten mit Einsatz eines zusätzlichen mechanischen Sperrelements in Schließstellung.

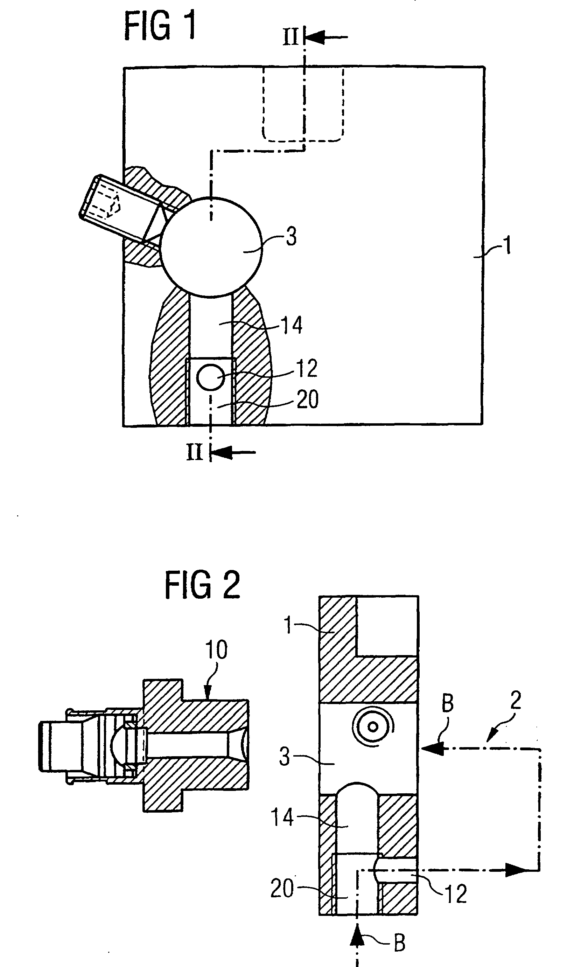

In den Fig. 1 und 2 ist in einer ersten Ausführungsform ein Teil einer Bolzenauslasseinrichtung zur Zuführung von hintereinander angeordneten Bolzen oder Stiften mittels Blasluft durch einen Kanal 2 zu einem Bolzenschweißgerät dargestellt. Hierbei weist die Bolzenauslasseinrichtung ein Lagerelement 1 mit einer zum Kanal 2 koaxialen Montageausnehmung 3 zur Aufnahme einer in Fig. 2 dargestellten Abführbuchse 10 oder eines Zuführschlauchs auf.

Der Zuführschlauch ist hierbei der Förderschlauch für Bolzen zwischen der Bolzenauslasseinrichtung und einem nicht näher dargestellten Schweißwerkzeug.

Mit dem Kanal 2 ist eine Luftzuführleitung 12 verbunden, welcher ein Nebenkanal 14 zugeordnet ist. Dieser Nebenkanal 14 führt nach Fig. 1 und 2 zu der Montageausnehmung 3 und ist darüber hinaus durch die Abführbuchse 10 oder durch den Zuführschlauch endseitig verschließbar. Vorteilhafterweise weist hierbei der Nebenkanal 14 einen größeren Durchmesser als die Luftzuführleitung 12 auf. Diese Luftzuführleitung 12 und/oder der Nebenkanal 14 zweigen von einem Hauptkanal 20 nach Fig. 2 ab. In der in Fig. 2 dargestellten Position liegt die Montageausnehmung 3 frei, so dass der Hauptteil des von einer nicht mehr dargestellten Quelle kommenden Blasluftstroms B über den Kanal 14 und die Montageausnehmung 3 ins Freie tritt und damit einem nicht näher dargestellten, in dem Kanal 2 befindlichen Bolzen keine kinetische Energie verleiht; dieser Bolzen kann daher nicht in gefährlicher Weise aus dem Kanal 2 herausschießen und zu Verletzungen führen.

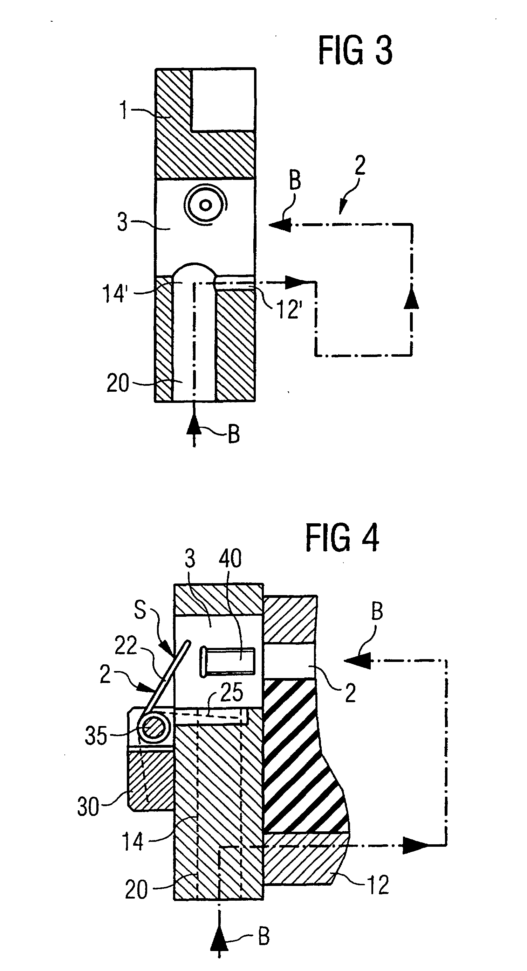

Bei der in Fig. 1 und 2 dargestellten Lösung ist im Lagerelement 1 die Länge des Nebenkanals 14 größer als die der Luftzufuhrleitung 12. Nach Fig. 3 besteht auch die Möglichkeit, dass die Luftzuführleitung 12' im oberen Bereich des Nebenkanals angeordnet ist und zumindest teilweise über ihre Länge zur Montageausnehmung 3 frei liegt. Hier ist im Lagerelement 1 die Länge des Nebenkanals 14' kleiner als die der Luftzuführleitung 12'.

Bei den vorgenannten Ausführungsformen kann die Luftzuführleitung 12 oder 12' parallel oder schräg zu der Längsachse der Montageausnehmung 3 verlaufen. In jedem Fall ist sicherzustellen, dass der Strömungswiderstand innerhalb des Nebenkanals 14 bzw. 14' erheblich geringer als der der Luftzuführleitung 12 bzw. 12' ist, um bei offener Montageausnehmung 3 keine hohe kinetische Energie auf einen im Kanal 2 befindlichen Bolzen wirken zu lassen.

Gemäß Fig. 4 besteht auch die Möglichkeit, diese vorgenannte pneumatische Ausblassperre mit einer mechanischen Ausblassperre zu kombinieren: In diesem Fall ist endseitig des Kanals 2 ein mechanisches Sperrelement 22 angeordnet, welches in Sperrstellung S in die Montageausnehmung 3 ragt. In Offenstellung wird der Kanal 2 freigegeben.

Das Sperrelement 22 ist durch Einlagern bzw. Entfernen der Abführbuchse 10 oder des Zuführschlauchs in die bzw. aus der Montageausnehmung 3 aus der gestrichelt dargestellten Offenstellung in die Sperrstellung S und umgekehrt überführbar. Vorteilhafterweise besitzt das Lagerelement 1 eine Aufnahmenut 25 zum Einlagern des Sperrelements 22 in der Offenstellung, d. h. in der Lage, in welcher die Abführbuchse 10 oder der Zuführschlauch in der Montageausnehmung 3 eingelagert und darin arretiert ist.

Das Sperrelement 22 kann als Feder ausgebildet sein, welche sich bei freier Montageausnehmung 3 selbsttätig aus der Offenstellung in die Sperrstellung bewegt und zwar infolge der Federkraft. Diese Feder kann stimseitig des Lagerlements 1 über eine Lagerstelle 35 an einem Halter 30 befestigt sein.

Insgesamt ergibt sich eine pneumatische oder einer pneumatisch-mechanische Ausblassperre, welche sicherstellt, dass ein im Kanal 2 befindlicher Bolzen 40 nicht in unerwünschter Weise herausschießen kann. Die Erfindung ist sowohl bei Rotorvereinzelnern als auch bei anderen bereits in der Praxis befindlichen Kostruktionen einsetzbar.

## Patentansprüche

1. Bolzenauslasseinrichtung zur Zuführung von hintereinander angeordneten Bolzen oder Stiften mittels Blasluft (B) durch einen Kanal (2) zu einem Bolzenschweißgerät, wobei die Bolzenauslasseinrichtung ein Lagerelement (1) mit einer zum Kanal (2) koaxialen Montageausnehmung (3) zur Aufnahme einer Abführbuchse (10) oder eines Zuführschlauchs aufweist, **dadurch gekennzeichnet, dass** einer mit dem Kanal (2) verbundenen Luftzuführleitung (12; 12') mindestens ein zu der Montageausnehmung (3) führender, durch die Abführbuchse (10) oder durch den Zuführschlauch endseitig verschließbarer Nebenkanal (14; 14') zugeordnet ist.

2. Bolzenauslasseinrichtung nach Anspruch 1, **dadurch gekennzeichnet, dass** der Nebenkanal (14, 14') einen größeren Durchmesser als die Luftzuführleitung (12; 12') aufweist.

3. Bolzenauslasseinrichtung nach Anspruch 1 oder 2, **dadurch gekennzeichnet, dass** die Luftzuführleitung (12; 12') und/oder der Nebenkanal (14; 14') von einem Hauptkanal (20) abzweigen.

4. Bolzenauslasseinrichtung nach einem der vorhergehenden Ansprüche, **dadurch gekennzeichnet, dass** im Lagerelement (1) die Länge des Nebenkanals (14) größer ist als die der Luftzuführleitung (12) (Fig. 2).

5. Bolzenauslasseinrichtung nach einem der Ansprüche 1 bis 3, **dadurch gekennzeichnet, dass** im Lagerelement (1) die Länge des Nebenkanals (14') kleiner ist als die der Luftzuführleitung (12') (Fig. 3).

6. Bolzenauslasseinrichtung nach Anspruch 5, **dadurch gekennzeichnet, dass** die Luftzuführleitung (12') zumindest teilweise über ihre Länge zur Montageausnehmung (3) offen ist.

7. Bolzenauslasseinrichtung nach einem der vorhergehenden Ansprüche, **dadurch gekennzeichnet, dass** die Luftzuführleitung (12; 12') parallel oder schräg zu der Längsachse der Montageausnehmung (3) verläuft.

8. Bolzenauslasseinrichtung nach einem der vorhergehenden Ansprüche, **dadurch gekennzeichnet, dass** der Strömungswiderstand innerhalb des Nebenkanals (14; 14') erheblich geringer als der der Luftzuführleitung (12; 12') ist.

9. Bolzenauslasseinrichtung nach einem der vorhergehenden Ansprüche, **dadurch gekennzeichnet, dass** endseitig des Kanals (2) ein mechanisches Sperrelement (22) angeordnet ist, welches in Sperrstellung (S) in die Montageausnehmung (3) ragt und in Offenstellung den Kanal (2) freigibt,
und dass das Sperrelement (22) durch Entfernen der Abführbuchse (10) oder des Zuführschlauchs aus der Montageausnehmung (3) aus der Offenstellung in die Sperrstellung überführbar ist bzw. dass das Sperrelement (22) durch Anbringen der Abführbuchse (10) oder des Zuführschlauchs in die Montageausnehmung (3) aus der Sperrstellung in die Offenstellung überführbar ist.

10. Bolzenauslasseinrichtung nach Anspruch 9, **dadurch gekennzeichnet, dass** das Lagerelement (1) eine Aufnahmenut (25) zum Einlagern des Sperrelements (22) in der Offenstellung aufweist.

11. Bolzenauslasseinrichtung nach Anspruch 9 und 10, **dadurch gekennzeichnet, dass** das Sperrelement (22) als Feder ausgebildet ist, welche sich bei freier Montageausnehmung (3) selbsttätig aus der Offenstellung in die Sperrstellung (S) bewegt.

12. Bolzenauslasseinrichtung nach Anspruch 11, **dadurch gekennzeichnet, dass** die Feder stirnseitig des Lagerelements (1) über eine Lagerstelle (35) an einem Halter (30) befestigt ist.

## Claims

1. Stud discharge device for feeding studs or pins arranged one behind the other through a channel (2) to a stud welding device by means of blast air (B), the stud discharge device having a bearing element (1) with a mounting opening (3) which is coaxial with the channel (2) and which is provided for receiving a delivery bush (10) or a feed tube, **characterised in that** at least one secondary channel (14; 14'), which leads to the mounting opening (3) and which can be closed at the end by the delivery bush (10) or by the feed tube, is assigned to an air supply line (12; 12') connected to the channel (2).

2. Stud discharge device according to Claim 1, **characterised in that** the secondary channel 14; 14') has a greater diameter than the air supply line (12; 12').

3. Stud discharge device according to Claim 1 or 2, **characterised in that** the air supply line (12; 12') and/or the secondary channel (14; 14') branch off from a main channel (20).

4. Stud discharge device according to one of the preceding claims, **characterised in that** the length of the secondary channel (14) in the bearing element (1) is greater than that of the air supply line (12) (Fig. 2).

5. Stud discharge device according to one of Claims 1 to 3, **characterised in that** the length of the secondary channel (14') in the bearing element (1) is less than that of the air supply line (12') (Fig. 3).

6. Stud discharge device according to Claim 5, **characterised in that** the air supply line (12') is open to the mounting opening (3) over at least part of its length.

7. Stud discharge device according to one of the preceding claims, **characterised in that** the air supply line (12; 12') runs parallel or obliquely to the longitudinal axis of the mounting opening (3).

8. Stud discharge device according to one of the preceding claims, **characterised in that** the flow resistance inside the secondary channel (14; 14') is considerably less than that in the air supply line (12; 12').

9. Stud discharge device according to one of the preceding claims, **characterised in that** there is arranged at the end of the channel (2) a mechanical blocking element (22) which in the blocking position (S) projects into the mounting opening (3) and in the open position frees the channel (2),
and **in that** the blocking element (22) can be moved from the open position to the blocking position by removing the delivery bush (10) or the feed tube from the mounting opening (3), or **in that** the blocking element (22) can be moved from the blocking position to the open position by fitting the delivery bush (10) or the feed tube in the mounting opening (3).

10. Stud discharge device according to Claim 9, **characterised in that** the bearing element (1) has a receiving groove (25) for accommodating the blocking element (22) in the open position.

11. Stud discharge device according to Claim 9 and 10, **characterised in that** the blocking element (22) is designed as a spring which moves automatically from the open position to the blocking position (S) when the mounting opening (3) is free.

12. Stud discharge device according to Claim 11, **characterised in that** the spring is fastened to a holder (30) at the front of the bearing element (1) via a bearing (35).

## Revendications

1. Dispositif de délivrance de goujons pour amener des goujons ou des broches disposées les unes derrière les autres, au moyen d'un air de soufflage (B) à l'intérieur d'un canal (2) jusqu'à un appareil de soudage de goujons, le dispositif de délivrance de goujons possédant un élément de support (1) comportant un évidement de montage (3) qui est coaxial au canal (2) et sert à loger un manchon d'évacuation (10) ou un tuyau d'amenée, **caractérisé en ce qu'**à une canalisation d'amenée d'air (12;12') reliée au canal (2) est associé au moins un canal secondaire (14; 14') qui aboutit à l'évidement de montage (3) et peut être fermé à son extrémité par le manchon d'évacuation (10) ou par le tuyau d'amenée.

2. Dispositif de délivrance de goujons selon la revendication 1, **caractérisé en ce que** le canal secondaire (14,14') possède un diamètre supérieur à celui de la canalisation d'amenée d'air (12;12').

3. Dispositif de délivrance de goujons selon les revendications 1 ou 2, **caractérisé en ce que** la canalisation d'amenée d'air (12;12') et/ou le canal secondaire (14;14') s'étendent en dérivation à partir d'un canal principal (20).

4. Dispositif de délivrance de goujons selon l'une des revendications précédentes, **caractérisé en ce que** dans l'élément de support (1), la longueur du canal secondaire (14) est supérieure à celle de la canalisation d'amenée d'air (12) (figure 2).

5. Dispositif de délivrance de goujons selon l'une des revendications 1 à 3, **caractérisé en ce que** dans l'élément de support (1), la longueur du canal secondaire (14') est inférieure à celle de la canalisation (12') d'amenée d'air (figure 3).

6. Dispositif de délivrance de goujons selon la revendication 5, **caractérisé en ce que** la canalisation d'amenée d'air (12') est ouverte au moins partiellement sur sa longueur en direction de l'ouverture de montage (3).

7. Dispositif de délivrance de goujons selon l'une des revendications précédentes, **caractérisé en ce que** la canalisation d'amenée d'air (12; 12') est parallèle ou oblique par rapport à l'axe longitudinal de l'évidement de montage (3).

8. Dispositif de délivrance de goujons selon l'une des revendications précédentes, **caractérisé en ce que** la résistance d'écoulement est nettement plus faible à l'intérieur du canal secondaire (14;14') que dans la canalisation d'amenée d'air (12;12').

9. Dispositif de délivrance de goujons selon l'une des revendications précédentes, **caractérisé en ce que** sur le côté d'extrémité du canal (2) est disposé un élément de blocage mécanique (22), qui, dans la position de blocage (S), fait saillie dans l'évidement de montage (3) et, dans la position ouverte, libère le canal (2), et
que l'élément de blocage (22) peut être transféré, par retrait du manchon d'évacuation (10) ou du tuyau d'amenée, à partir de l'ouverture de montage (3), depuis la position ouverte dans la position de blocage ou que l'élément de blocage (22) peut être transféré au moyen du montage du manchon d'évacuation (10) ou du tuyau d'amenée dans l'évidement de montage (3), depuis la position de blocage dans la position ouverte.

10. Dispositif de délivrance de goujons selon la revendication 9, **caractérisé en ce que** l'élément de support (1) comporte une rainure de réception (25) utilisée pour l'insertion de l'élément de blocage (22) dans la position ouverte.

11. Dispositif de délivrance de goujons selon les revendications 9 et 10, **caractérisé en ce que** l'élément de blocage (22) est agencé sous la forme d'un ressort, qui se déplace automatiquement de la position ouverte dans la position fermée (S), dans le cas où l'évidement de montage (3) est libre.

12. Dispositif de délivrance de goujons selon la revendication 11, **caractérisé en ce que** le ressort est fixé sur le côté frontal de l'élément de support (1) sur un support (30) par l'intermédiaire d'un point de support (35).
